# EUROPEAN PATENT APPLICATION

(11) **EP 1 250 022 A1**
(43) Date of publication of application: **16.10.2002**
(21) Application number: 01304868.1
(22) Date of filing: 04.06.2001
(51) Int. Cl.: H04Q 7/38

(54) **Providing quality of service in a telecommunications system such as a UMTS or other third generation system**

(30) Priority: 09.04.2001 EP 01303317
(71) Applicant: LUCENT TECHNOLOGIES INC., Murray Hill, New Jersey 07974-0636 (US)
(72) Inventor: Chen, Xiaobao, Swindon, Wiltshire SN5 5DQ (GB); Richards, Derek, Swindon, Wiltshire SN6 6LL (GB)
(74) Representative: Sarup, David Alexander

(57) **Abstract**

A telecommunications network consists of network resources including at least one service domain which has a user's terminal. There is a controller operative to control transmissions of a data stream from or to the user's terminal with a predetermined quality of service. The quality of service depends on the terms of a service level agreement between the user and the service domain, processed by the controller into a set of policies to be applied. The policies include dynamic selection and allocation of the network resources so as to transmit the data stream with the expected quality of service.

## Description

### Background

The present invention relates to a method of transmitting a data stream in a telecommunications system, and to a corresponding telecommunications network.

Mobile radio systems like the Global System for Mobile communications (GSM) have been used mostly for mobile telephony. However, the use of mobile data applications like facsimile transmission and short message exchange is becoming more popular. New data applications include wireless personal computers and, mobile offices. These applications are characterized by "bursty" traffic. In other words, a relatively large amount of data is transmitted over a relatively short time interval followed by significant time intervals when little or no data is transmitted. New 3G (so-called third generation) mobile radio systems are being developed such as UMTS (Universal Mobile Telecommunications Standard) with higher bit rate for better handling of large amounts of bursty data as well as those services that require high bandwidth such as audio/video and multimedia services.

In bursty traffic situations, packet-switched communications mechanisms better utilize the transmission medium than circuit-switched mechanisms. In a packet-switched network, the transmission medium is used only on demand, and a single physical channel can be shared by many users. Another advantage is that in contrast to time-oriented charging applied for circuit-switched connections, packet-switched data services allow charging depending on the amount of data transmission and on the quality of service of that transmission.

Quality of service (QoS) corresponds to the goodness (quality) with which a certain operation (service) is performed. Certain services like multimedia applications or a simple phone call need guarantees about accuracy, dependability, and speed of transmission. Typically, in data communications, "best efforts" are employed, and no special attention is paid to delay or throughput guarantees. Quantitative parameters in considering quality of service may include throughput (such as the average data rate or peak data rate), reliability, delay, and jitter which means the variation delay between a minimum and maximum delay time that a message experiences.

Data telecommunication often involves transmission of messages from a sending user's terminal within a first network eg GSM, UMTS, Internet Protocol (IP) to a second different network where the receiving user's terminal resides often over yet further other network(s). The various networks deploy different QoS control mechanisms from each other. As a result of the variety of QoS control technologies and the resultant inconsistency of traffic transmission behaviour due to the usually unrelated changes and variations of network load and performance of each individual network, good end-to-end quality of service (QoS) control is complicated and hard to achieve.

Most existing resource management schemes have involved using selection and configuration of resources that do not adapt to changes in the accessibility and availability of resources, and environmental communication conditions, which may lead to deterioration of QoS and low utilisation of resources such as expensive radio resources. The existing dynamic resource control schemes allow for flexible change and re-configuration of available resources but they are not linked with the user-level QoS requirements that are mostly expressed in the form of service level agreements (SLA's) between a customer and its service providers. As a result, the change or re-configuration of resources often lead to unacceptable change of the achievable QoS. Moreover, such existing resource management mechanisms do not allow the operators and service providers to readily differentiate their services or the QoS they can provide from their competitors.

### Summary of the Invention

The present invention provides a telecommunications network comprising network resources including at least one service domain which comprises a user's terminal and a controller operative to control transmission of a data stream from the user's terminal to another network node and/or to the user's terminal from another network node with a predetermined quality of service, said quality of service being dependent upon the terms of a service level agreement (SLA) between the user and the service domain, processed by the controller into a set of policies to be applied, the policies including selection and allocation of the network resources so as to transmit the data stream with the selected quality of service.

Thus advantageously provides flexible and effective resource management to provide good QoS that meets the SLA requirements while maintaining efficient use of resources. This is particularly important in Wireless networks such as in UMTS where the accessibility and availability of radio resources varies over time so there is significant complexity and difficulty in consistently maintaining QoS and efficient utilisation of resources. This is, in particular, the case for the management of radio resources.

The selection and allocation of resources can be dynamic; for example, changing on a per call or periodic or on the fly(near real time) basis.

The present invention in its preferred embodiments provides a resource management scheme for linking Service Level Agreements with policies control so as to enable flexible and dynamic selection and configuration of resources (such as radio bearers) in existing 3G networks such as UMTS. The preferred schemes directly link SLAs that describes the user-level QoS/service requirements with the Policies that subsequently enable flexible and dynamic selection and configuration of resources such as radio access bearers at the network level.

This present invention in its preferred embodiments achieves QoS provision and efficient resource use by linking SLA's with resource management policies that enables the flexible and dynamic resource selection and configuration. It can be considered that a "top-to-bottom" approach is taken linking the SLA's with the network resource management policies and then enforcing the SLA's policies during the selection, set-up and (re-)configuration of the transport bearers such that the associated QoS resources are allocated and controlled accordingly. In the meantime, the resultant network performance can be monitored against the requirement defined in the SLA's and can be communicated back to the customers.

This invention in its preferred embodiments incorporates SLA's into the QoS resource management in 3G networks such as UMTS and future networks infrastructures and is directed at providing QoS with efficient use of resources thereby enabling the operators and service providers to differentiate their services by emphasising their service eccentric QoS requirements. QoS Policies are identified to be the link between the SLA-based service level QoS policy management and the policy-based QoS provisioning and resource management at the transport bearers level.

Service level agreements can be defined easily using a library of standard terms understood by all service domains across the end-to-end traffic path and thus provides the basis for setting up end-to-end service provisioning, the required quality of service of which is supported by all the bearers across different network operators. Service level agreements also facilitate the provision of good quality services across different service domains run by different service providers.

Furthermore service level agreements provide an effective means for differentiating the service offered by one service provider from those of other service providers. As an example, Spring Communications Co. will guarantee network performance for its corporate Internet and Intranet Customers, setting a precedent for voluntary culpability among service providers. As a further example UUNet's SLA's include 100% availability guarantees, average monthly latency of no more than 85 milliseconds roundtrip within UUNet's backbone, and notifications when SLA's are violated.

Furthermore SLA's ensure that customers have a clear understanding of QoS expectations and the associated costs. The ability to measure and manage service quality enables service providers to offer different classes of service. Still furthermore, SLA's facilitate the achievement of Policy-based QoS resource management.

Furthermore, SLA's facilitate a close association between the pre-defined service requirements and constraints on the performance of the networks and thus facilitate monitoring and reporting of the operational status of the network in terms of QoS control and service provisioning . Still furthermore, SLA's provides a useful tool for the network operators or service providers to control both their services and their networks. For example, it allows operations staff to prioritise diagnosis and problem resolution issues, such as re-allocating the QoS resources based on the penalties associated with the problems.

Furthermore, the present invention in its preferred embodiments has advantages of centralised management, abstracted (or simplified) management data, commonality across devices, automation of management tasks, fewer interfaces, and consistency across interfaces.

The present invention also provides a method of transmitting a data stream from a to a user's terminal to or from another point in a telecommunications network, the network comprising at least one service domain and network resources, the data stream being transmitted so as to provide the user with a predetermined quality of service, said quality of service being dependent upon the terms of a service level agreement (SLA) between the user and the service domain in which the user's terminal resides, the terms of the service level agreement being processed into a set of policies to be applied, the policies including selection and allocation of resources so as to provide the selected quality of service.

### Brief Description of the Drawings

A preferred embodiment of the present invention will now be described by way of example and with reference to the Figures in which:
Figure 1 is a diagram illustrating the mechanisms for end-to-end quality of service (QoS)provision in a preferred embodiment of the present invention;
Figure 2 is a diagram illustrating i.e. source management in a UMTS network involving conversion of SLA's into policies to be applied in resource allocation;
Figure 3 is a diagram illustrating the UMTS service information base (part of Figure 2) in more detail;
Figure 4 is a diagram illustrating the process of SLA negotiation;
Figure 5 is a diagram illustrating the process of UMTS session initiation and establishment, and;
Figure 6 is a diagram illustrating RAB establishment.

### Detailed Description of Preferred Embodiment(s)

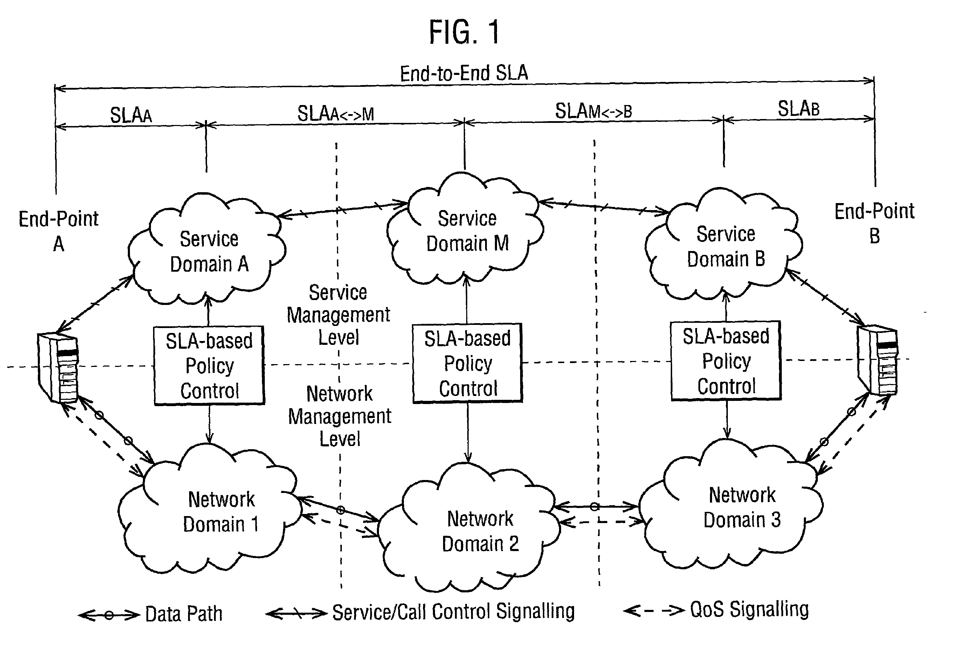

As shown in Figure 1, a first user (denoted end-point A) has a service level agreement SLA_{A} which defines the quality of service which he will receive from his local service provider, denoted Service Domain A. In effect an End to End Service level agreement is provided to him which defines the QoS he can expect, not just from his local service provider A is control of Network domain 1, eg GSM, UMTS, Internet Protocol Networks, but also from all other service providers, A+1, A+2..., M, M+1,...B who handle his data stream to second user B (receiving end-point). The second user B has a service level agreement SLA_{B} with his local service provider, denoted Service Domain B as well as a similar End to End Service Level Agreement.

### Service Level Agreements and End to End Service Level Agreements

Service Level Agreements provide a set of specifications on various aspects of services including the QoS specifications that are agreed by two communication peers such as an end terminal with its network and between two networks. Service Level agreements can also be between a user and its service providers/network operators and between service providers/network operators. There are two categories of SLA's:
Intra-Domain SLA: the SLA between a user/network terminal equipment and its service provider/network operator/networks.
Inter-Domain SLA: the SLA between two service providers/operators/networks.

As regards quality of service, service level agreements (SLA's) can define e.g. the minimum and maximum data rates which will be applied (throughput) and maximum call set-up time.

It can thus be seen that an end-to-end service level agreement is the set of Intra-domain SLA's and Inter-Domain SLA's between two end user's terminal equipment. It represents the agreed services and the associated qualities across all the networks/service domains between the two communication end points. In other words end-to-end SLA is managed as the concatenation of Intra-domain SLA's and Inter-domain SLA's. Each service domain bearers the legal responsibility (if required to do so by the end-to-end SLA) to guarantee the SLA's requirements in its own service domain.

### Quality of Service (QoS) Control at Network Management Level

At the Network Management Level, the provision of end-to-end quality of service is a consequence of quality of service (QoS) control in each network domain, e.g. A, ....M, ....and B, each of which is associated with its service domain A,...M,.... and B as shown in Figure 1.

### Intra-Domain QoS control:

QoS control and resource management in each network domain is performed by applying Policy-based QoS resource control and management where the policies are derived from SLA's to reflect the constraints over the selection, allocation and performance of the network bearers, the corresponding cost and even the associated penalties that are defined in the Intra-domain SLA's.

### Inter-Domain QoS control:

To achieve end-to-end QoS and thus eventually meet the requirements of end-to-end SLA's, QoS inter-working between adjacent network domains is performed by applying the inter-domain QoS policies that are derived from the Inter-domain SLA's. The Inter-domain QoS Policies are the rules or the set of conditions that both peers are required to meet in terms of the authorisation, allocation, reservation and commitment of QoS resources as well as user traffic conditioning so as to meet the binding requirements that are defined by the corresponding inter-domain SLA.

### Services and policies

Quality of service is often specified in terms much more general than suitable for system configuration. For example, an application that demands transfer of an approximately known volume of data within a specified time justifies scheduling classes of traffic with appropriate capacity configurations along the path of the transfer. Such an application also requires (time of day) scheduling.

Policy and Services Policy management is often discussed in terms of the services that are supported by policy. There are different kinds and levels of information required when managing a networked environment. Service management is a relatively high level view of a system. Consider an "Olympic" service, in which there are multiple levels of service. for example: Bronze, Silver, and Gold. In such discussions Gold is better than Silver, and Silver is better than Bronze. When actually describing the meaning of the service, though, things become more complex, and so Policies are used to implement services in a telecommunications environment.

Services are described in a manner that is higher-level than policy itself; that is, services are described in a form that describes characteristics from which policy information is then derived. Such a higher level representation may be required to perform some functions in a managed telecommunications environment. For example, different policies that describe different behaviours may be deployed to two network entities through which a customer's traffic passes. In such an environment it may be impossible to tell if a conflict exists simply by looking at the policies them- selves, but it may be possible to determine if a conflict exists with the service(s) to which the customer has subscribed.

### How End to End Quality of Service is Provided

Intra-and Inter-SLA's are specified, negotiated and finally agreed both between the users and their service providers and between service provider's SLA's, The policies that govern the access and the control of the QoS resources in the network domains are derived from the intra- and inter-domains SLA's. The policy decisions are then enforced during the QoS management including resource access control (what traffic can access the network resources) and traffic handling and conditioning (what traffic gets through the network, what traffic get discarded if there is congestion and what traffic has special quality requirements that must be guaranteed beyond the level of traffic classes and priorities).

### The Control Infrastructure for SLA-based Policy Enabled Dynamic Resource Management- an example in a UMTS environment

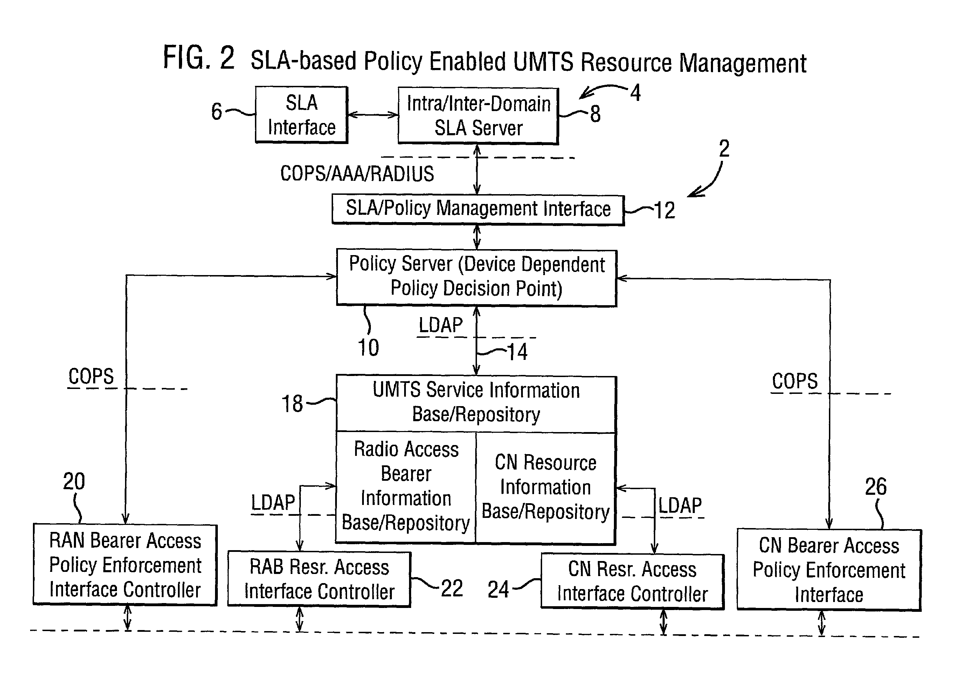

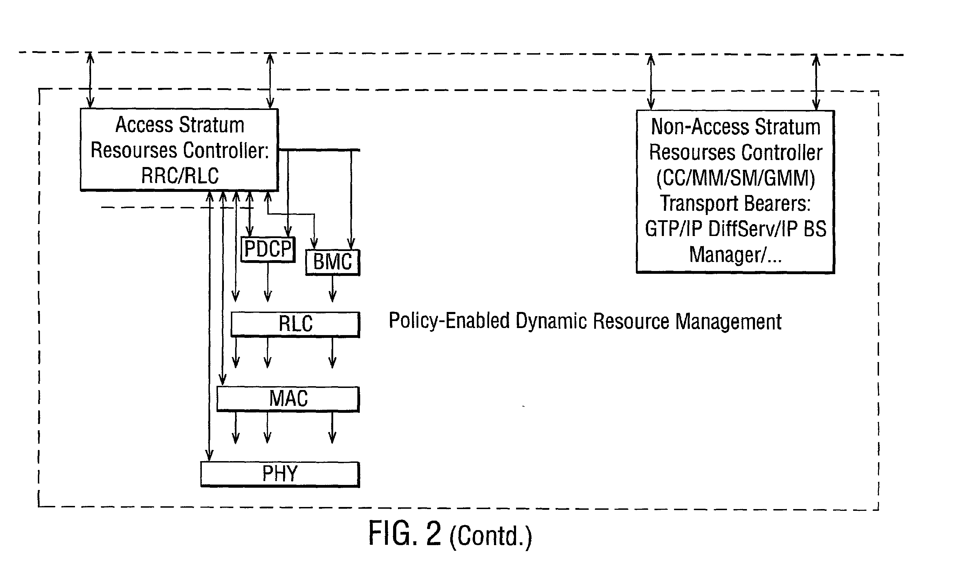

As shown in Figure 2, the basic elements of SLA based Policy-enabled Radio Resource Management infrastructure 2 include an SLA Server 4 including the SLA Interface 6 and the SLA Intra-domain and Inter-domain Server 8. The SLA server is responsible for SLA-negotiation/re-negotiation, SLA specification, SLA report, etc.

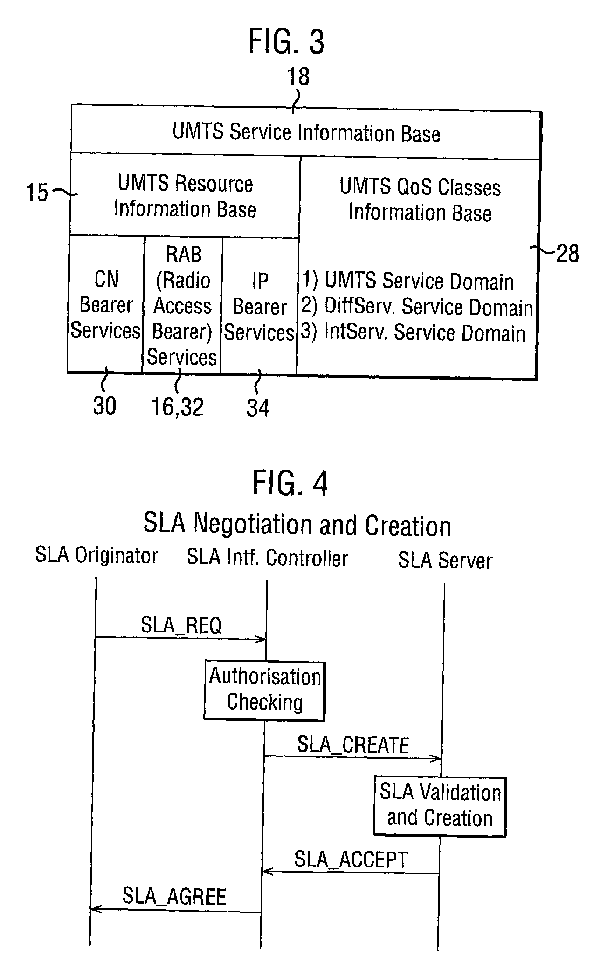

There is also a Policy Server 10 including the SLA/Policy management Interface 12 which interfaces with the SLA Server 4, the Policy Repository/Database (not shown) and the Interface 14 with the UMTS Radio Resource Information Base/Repository 16 which is part of the UMTS service information base 18 as described below and with reference to Figure 3. The Policy Server 10 translates the SLA into corresponding policy information and stores it in the policy Repository (not shown). It also serves as policy decision point to make policy decisions to be used to make resource configuration and reservation.

The UMTS Service Information Base 18 serves as the resource information manager that maintains the information on the configuration, the identity and the characteristics of each resource entity. This is described in more detail with reference to Figure 3 later in this text. As mentioned previously, the UMTS Service Information Base includes the UTRAN Radio Resource Information Repository/Database 16 which includes the database that stores information on the radio resource entities and the interface(s) to the radio resource controller (RRC) that access the resource entities to configure the radio resources in UTRAN.
There is also a Radio Network Bearer (RAN) Access Policy Enforcement Interface Controller 20: which interfaces with the Policy Server (10) to download or retrieve policy decision information that is used to configure the radio resources so as to meet certain criteria such as provision of acceptable on a QoS and acceptably efficient usage resources access bearer (RAB).
There is also Radio Access Bearer (RAB) Resource Access Interface Controller 22 which based on the policy information/decision, identifies the required radio access bearer (e.g. selecting an appropriate combination of radio channels such as DSCP + DCH or DSCP +ARCH for certain UMTS Service classes) and then controls the corresponding radio resource management functional entities such as RRC/RLC (radio resource control/radio link control) to set up the resources and configure them accordingly.
There is also a Core Network Resource Access Interface Controller 24 which interfaces with Policy Server 10 to download or retrieve policy decision information that is used to configure the core network resources so as to meet certain criteria such as QoS provisioning on a GTP_U and the associated GPRS bearer resource utilisation.

There is also a Core Network Bearer Access Policy Enforcement Interface 26 which based on the policy information/decision, it identifies the required core network resources (e.g. the selection and set-up of appropriate Secondary PDP and the GTP_U) and then control the corresponding core network management functional entities such as the GTP protocol entities to set up the core network bearer and configure them accordingly.

### More about the UMTS Service Information Base

As shown in Figure 3, the UMTS Service Information Base 18 consists of UMTS Resource Information Base 15 and a UMTS QoS Service Information base 28.

The UMTS Resource Information Base is defined in terms of the resource entities in each key network element in UMTS including Core Network (CN) 30, Radio Access Network (UTRAN) 32 i.e. the RAB radio resource information base 16, IP Bearer Resources, External Network Resources (not shown) as well as Terminal UE local Resources (not shown).

The UMTS QoS Information Base 28 includes QoS service attributes and QoS service classes.

QoS Service Attributes: can be expressed as "absolutes", but the operators in the policy schema would need to be more sophisticated. Thus, to represent a percentage, division and multiplication operators are required (e.g. Class AF2 gets .05 * the total link bandwidth).

QoS Service Classes are usually device independent. They represent the expected attributes to be exhibited by traffic delivery behaviour across the same network domain. Therefore they can be domain dependent. For example, UMTS QoService Classes may expect different traffic handling behaviour from the DiffServ QoSService Classes. It has a set of subclasses that define device-independent QoS control primitives.

For example, in the UMTS Service Domain, the QoS Service Classes are:
- Conversational Bearer Service;
- Streaming Bearer Service;
- Interactive Bearer Service;
- Background Bearer Service;

In the DiffServ Service Domain, the QoS Service Classes are:
- AF (Assured Forwarding) Bearer Service:
- EF Bearer Service;
- BE (Best-Effort) Bearer Service;

In IntServ Service Domain, the QoS Classes are:
- G (Guaranteed) Bearer Service;
- CL (Controlled Load) Bearer Service;
   and for GPRS; the QoS classes are:
- Throughput Bearer, and
- Delay Bearer.

As shown in Figure 3, the UMTS Radio Resource Information Base 16 consists of a Core Network (CN) Resource Information Base 30, Radio Access Bearer Resource Information Base 32, IP Bearer Resource Information Base 34. The Core Network Resource Information Base 30 includes those resources that are specific to the Core Network such as Primary PDP/Secondary PDP, GTP_U, etc. The Radio Access Bearer (RAB)Resource Information Base 32 includes those resources that are specific to UMTS Radio Access Network such as UTRAN. For example, the RAB resources include the logical channels of RLC, the transport channels at the MAC layer and the physical channels at the physical layers. Finally, the IP Bearer Resource Information Base 34 includes those resources that are specific to IP bearer level i.e. the IP Bearer carried over GTP_U within UMTS Core Network.

### An example Resource Management operation

An example is policy enabled radio access bearer (RAB) assignment in a UMTS telecommunications network. The major control steps include:
(a.) SLA Negotiation and Assignment,
(b.) SLA and Policy Translation,
(c.) Policy Consistency Control under the Management of UMTS Resource Information Base (URIB),
(d.) UMTS Session Initiation with Policy-Enabled CN Bearer Access control and configuration, and
(e.) Policy Enabled RAB Establishment in UMTS.

Each of these five steps is considered in turn below.

### (a.) SLA Negotiation and Assignment

The control procedure for SLA negotiation and assignment is shown in Figure 4, and is a follows:
1. SLA_REQ: End user or service originating operator/ service provider sends a SLA assignment requests to the SLA Interface Controller.
2. SLA_CREATE: After performing authorisation checking on the on the requested SLA, the SLA Interface Controller sends a SLA creation message to the (Intra/Inter-Domain) SLA Server.
3. SLA_ACCEPT: after validating the service availability, the SLA Server creates and accepts the SLA creation request.
4. SLA_AGREE: the SLA Interface Controller sends the agreed SLA to the SLA originator.

### (b.) SLA and Policy Translation

The SLA created in (a) above is translated by the SLA/Policy Management Interface 12 into a set of polices which takes the following generic format:
IDENTITY :: = "WHO and/or WHAT"(e.g. user ID, IP address, service types)
IF :: "CONDITIONS( ) = TRUE"(e.g. time/service/QoS constraints, violations, etc), THEN :: "ACTIONS( )" (e.g. allocate a X kbps bandwidth with no more than 25 ms delay in the service domain A/DiffServ Domain B/Device)

Then the newly created or modified Policy entry is added to the Policy Server 10.

### (c.) Consistency Control against the Management of UMTS Radio Resource Information Base 16 (URIB); Policy

In order to guarantee the policy consistency and the resource availability in association policy entry, the URIB needs to be checked and, if possible, updated with the creation of a new/updated policy entry. LDAP (Lightweight Directory Access Protocol) is used to do this.

For example, where the original policy entry is:"An SLA request to access the transport channel of DCH in UTRAN for a non-real time packet data services is forbidden during peak hours for all users.", then if the SLA originator is a premium user and has successfully created an SLA with its service provider (say by paying premium rate), the original policy entry is updated into: *An SLA request to access the transport channel of DCH in UTRAN for a non-real time packet data services is forbidden during peak hours for all other users except for the premium users who are charged at premium rate.*

### (d.) UMTS Session Initiation with Policy-Enabled CN Bearer Access control and configuration.

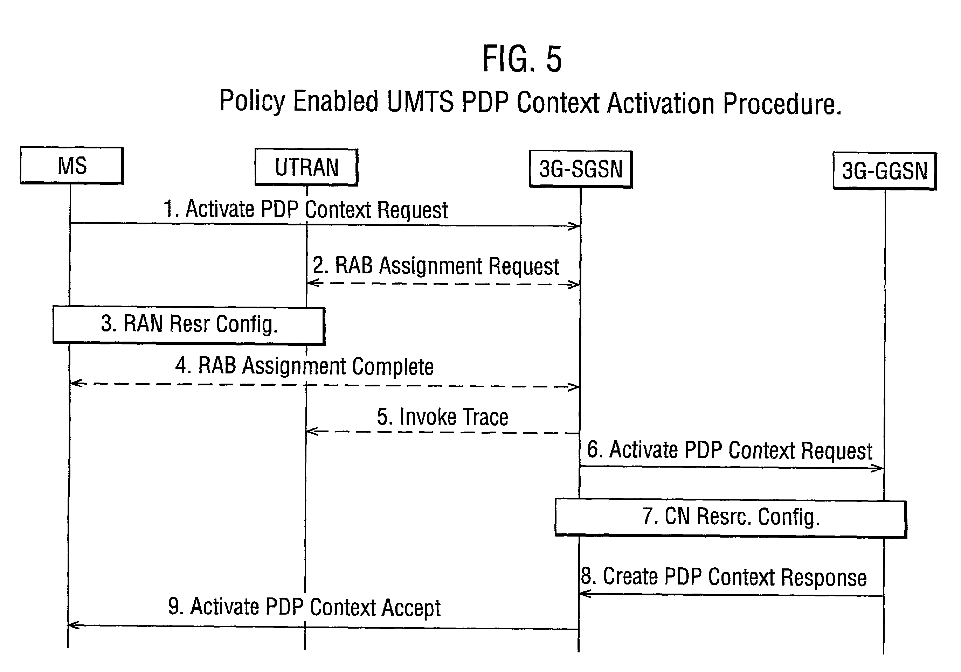

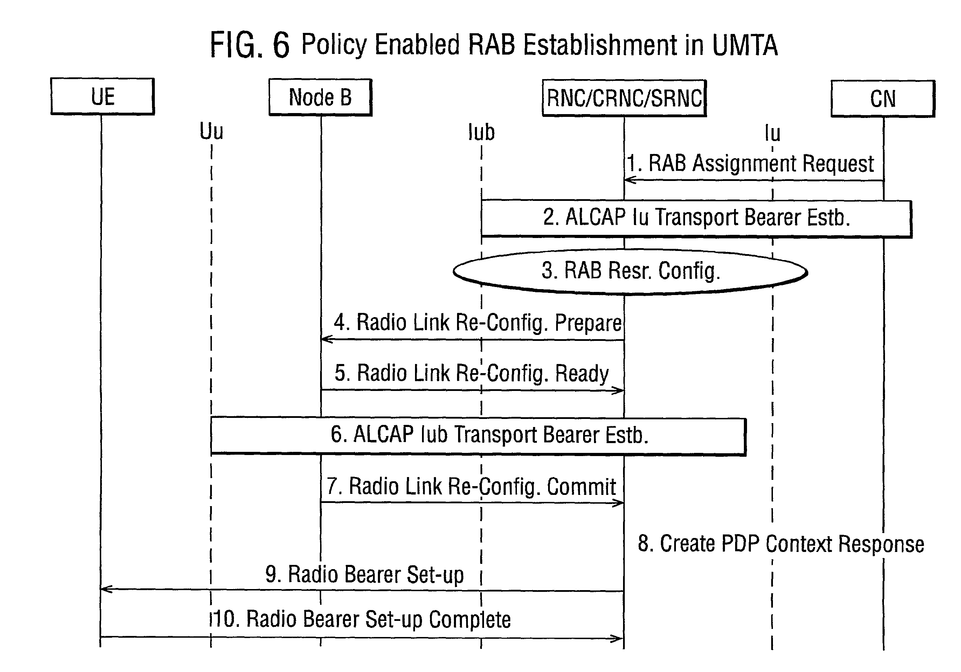

Activating the set-up procedure for the policy decision point (PDP) Context initiates the UMTS Session. This procedure which has nine steps and is shown in Figure 5 is as follows:
1. A user terminal (user equipment) UE sends an Activate PDP Context Request Network Service Access Point Identifier (NSAP), transaction identifier PDP Type, PDP Address, Access Point Name, QoS Requested, PDP Configuration Options) message to the Serving GPRS Support Node (SGSN) to initiate the establishment of UMTS Bearer between the UE and the UMTS network.
   In alternative embodiments using GSM rather than UMTS, security functions may be executed. These procedures a re defined in sub-clause "Security Function" of the relevant standard.
2. In UMTS, radio access bearer (RAB) Setup is done by the RAB establishment procedure.
3. After receiving the RAB Assignment request from SGSN, a radio network controller RNC will initiate policy-enabled RAB assignment control procedure as shown in Figure 6.
4. The UMTS terrestrial radio access network UTRAN performs policy-enabled radio access bearer setup and configuration procedures as shown in Figure 6.
5. If base station (BSS) trace is activated, then the SGSN shall send an Invoke Trace (Trace Reference, Trace Type, Trigger Id, Operation and Maintenance Centre (OMC Identity) message to the BSS or UTRAN. Trace Reference, and Trace Type are copied from the trace information received from the home location register (HLR) or OMC.
6. The SGSN validates the Activate PDP Context Request using PDP Type (optional), PDP Address (optional), and Access Point Name (optional) provided by the mobile station (user equipment) MS and the PDP context subscription records. The validation criteria, the access point name (APN) selection criteria, and the mapping from APN to a gateway CPRS support mode (GGSN) are described in annex A of the relevant 3^{rd} Generation Partnership Project Technical Specification TS23.060.
   The SGSN sends a Create PDP Context Request (PDP Type, PDP Address, Access Point Name, QoS Negotiated, Tunnel End point identifier (TEID), NSAPI, mobile subscriber ISDN number (MSISDN), Selection Mode, Charging Characteristics, Trace Reference, Trace Type, Trigger Id, OMC Identity, PDP Configuration Options) message to the affected GGSN. Access Point Name shall be the APN Network Identifier of the APN selected according to the procedure described in annex A in TS23.060 mentioned above.
7. After sending from the SGSN and receiving the Create PDP Context Request at the GGSN, the SGSN and GGSN perform the Policy Enabled CN Bearer Management by enquiring of the UMTS Radio Resource Information base 16 through the CN Resource Access Interface Controller 24 to identify and then locate the CN resources entries (30) that are to be activated and (re-)configured and decide the associated parameters with regard to the existing session request.
   Based on the identified resource entities and the required configuration parameters, SGSN and the GGSN performs and admission/capacity control (via the UMTS base station Manager) and, if successful, configure the CN resources such as the establishment of GPRS tunnelling protocol GTP_(U&C) between RNC and SGSN, and between SGSN and GGSN.
   The GGSN also creates a new entry in its PDP context table and generates a Charging Id. The new entry allows the GGSN to route PDP protocol data units (PDU)s between the SGSN and the external PDP network, and to start charging. The GGSN then returns a Create PDP Context Response (TEID, PDP Address, PDP Configuration Options, QoS Negotiated, Charging Id, Cause) message to the SGSN. PDP Address is included if the GGSN allocated a PDP address. If the GGSN has been configured by the operator to use External Public data network (PDN) Address Allocation for the requested access point name APN, then PDP Address shall be set to 0.0.0.0, indicating that the PDP address shall be negotiated by the MS with the external PDN after completion of the PDP Context Activation procedure.
   If QoS Negotiated received from the SGSN is incompatible with the PDP context being activated, then the GGSN rejects the Create PDP Context Request message. The GGSN operator configures the compatible QoS profiles according the enquiry result from the CN Resource Information Base.
8. After successful CN resource configuration, GGSN sends Create PDP Context Response to the SGSN.
9. After receiving the Create PDP Context Response, the SGSN inserts the NSAPI along with the GGSN address in its PDP context. If the mobile station (MS) has requested a dynamic address, the PDP address received from the GGSN is inserted in the PDP context. The SGSN selects Radio Priority and Packet Flow Id based on QoS Negotiated, and returns an Activate PDP Context Accept (PDP Type, PDP Address, TI, QoS Negotiated, Radio Priority, Packet Flow Id, PDP Configuration Options) message to the MS. The SGSN is now able to route PDP PDUs between the GGSN and the MS, and to start charging. SGSN then finally sends Activate PDP ContextAccept to the MS and finishes the establishment of the UMTS Bearer.

### (e.) Policy Enabled RAB Establishment in UMTS

As shown in Figure 6, after receiving the RAB Assignment request from the SGSN, the RNC initiates the Policy enabled RAB establishment in the UTRAN. The procedure which has ten steps is described below, the steps being considered in turn:
1. A RAB Assignment Request is sent to establish and configure the necessary radio resources in the UTRAN. The request is sent from the SGSN in the Core Network (CN) to the RNC.
2. The Radio Interface (Iu) transport bearer in the user plane is set up between the RNC and the SGSN by using access link control application protocol (ALCAP) for the user traffic.
3. The RNC needs to identify the appropriate RAB's to be set up or the modified information element for existing RAB's.
   Through the RAB Resource Access Interface Controller 22, the radio network controller RNC radio resource controller (RRC) sends an RAB resource enquiry to the RAB Information Base for selecting the Accessible RAB with the associated configurable/non-configurable parameters.
   For example, according to the updated Policy Decision information (e.g. the use of DCH by premium users at peak hours by applying premium charging rates) stored in the Policy Server 10, the RAB Resource Information Base 32 will update the accessibility status of DCH channels from "NO" to "YES" and then further link the DCH resource entity to a set of DCH configuration parameters and the allowed transmission characteristics. Upon receiving a DCH Configuration Enquiry from the RAB Resource Access Interface controller 22 on behalf of the RNC (RRC), the RAB Information Base will respond by sending a DCH Configuration Response to report back the changed accessibility status and the (re-configurable) DCH parameters and the allowed DCH transfer characteristics. Subsequently the RNC (RRC) will use the retrieved DCH and the associated parameters to configure the DCH channel for access by Premium Users during the peak-hours for packet services.
   In general, the RAB Resource Access Enquiry activates a search through a list of RAB's for those RAB's (identified by RAB ID's) appropriate for the service requests. For each RAB to the established, the RNC will identify the RAB Parameter Information Elements such as AMR (Adaptive Multi-Rate Speech codecs) encoded traffic, RAB Asymmetry-Indicator (Symmetry BiDirectional. Asymmetry Unidirectional DownLink, Asymmetry Unidirectional Uplink), the QoS Parameters (e.g. Maximum Bit Rate, Guaranteed Bit Rate).
   Based on the RAB QoS, the RNC will determine the RB QoS parameters as well as Physical Channel QoS parameters to determine the dynamic bearer characteristics such as the TFS (up-link and downlink).
4. RNC (RRC) sends Radio Link (Re-) Configuration Prepare message to the base station (Node-B) to inform the base station (Node-B) of the initiation or modification of requested RAB.
5. In response base station, (Node-B) sends Radio Link (Re-) Configuration Ready back to the RNC.
6. RNC and base station (Node-B) uses ALCAP to set up the transport Bearer for the user traffic on Iub and subsequently configures the RLC, MAC and the PHY layers to set up the required (dynamic) bearer characteristics.
7. As a confirmation for the completion of Radio link set-up and the appropriate configuration, RNC sends a Radio Link Reconfiguration Commit message to the base station (Node B).
8. Then RNC sends a Radio Bearer Set-up message to the user equipment (mobile station) UE to set up the RNC connection to inform and exchange the decision on the selection and allocations of the Radio resources (Steps 1-7 above).
9. As a confirmation for successful set-up of Radio Bearer between UE and RNC, the UE sends a Radio Bearer Set-up complete message to the RNC.
10. After receiving the confirmation from the UE for a successful set-up of Radio Bearer, RNC sends Radio Access Bearer Assignment Complete to the CN networks (SGSN).

The physical layer offers services to the MAC layer via the transport channels that were characterised by how and with what characteristics data is transferred. The MAC Layer, in turn, offers services to the RLC layer by means of logical channels which are characterised by what type of data is transmitted.

Data generated at a higher layer is carried over the air with transport channels, which are mapped in the physical layer to different physical channels. The physical channel is required to support variable bit rate transport channels to offer bandwidth-on-demand services, and to be able to multiplex.

## Claims

1. A telecommunications network comprising network resources including at least one service domain which comprises a user's terminal and a controller operative to control transmission of a data stream from/to the user's terminal to/from another network node with a predetermined quality of service, said quality of service being dependent upon the terms of a service level agreement between the user and the service domain, processed by the controller into a set of policies to be applied, the policies including selection and allocation of the network resources so as to transmit the data stream with the selected quality of service.

2. A telecommunications network according to claim 1, in which the policies include dynamic selection and allocation of the network resources.

3. A telecommunications network according to claim 1 or claim2, in which the controller comprises an information base (18) which stores information (15, 16, 30, 32, 34) on the current status of the network resources for selection and allocation purposes.

4. A telecommunications network according to claim 3, in which the network resources include radio resources and the information base includes information (16, 32) on the current status of the radio resources.

5. A telecommunications network according to claim 3 or claim 4, in which the information base also includes information (28) on the various classes of quality of service one of which is or has been selected by the user.

6. A telecommunications network according to any preceding claim, in which the telecommunications network is a UMTS or other third generation (36) system.

7. A telecommunications network according to any preceding claim in which for call setup the dynamic selection and allocation of network resources is undertaken.

8. A telecommunications network according to any preceding claim, in which for a predetermined quality of service defined by a service level agreement (SLA) a hierarchical set of policies are applied governing the timing, prioritisation and rate of transmission of data of said data stream.

9. A telecommunications network according to any preceding claim in which the user's quality of service depends on the level of quality of service selected in the user's service level agreement.

10. A telecommunications network according to any preceding claim, in which policies for transmission of data of said data stream are selected dependent upon a process of negotiation between the user's terminal and service domain as to be quality of service to be applied.

11. A telecommunications network according to any preceding claim, in which there are a plurality of service domains and policies for transmission of data of said data stream by a service domain are selected dependent upon a process of negotiation between service domains as to the quality of service to be applied.

12. A method of transmitting a data stream from a to a user's terminal to or from another point in a telecommunications network, the network comprising at least one service domain and network resources, the data stream being transmitted so as to provide the user with a predetermined quality of service, said quality of service being dependent upon the terms of a service level agreement (SLA) between the user and the service domain in which the user's terminal resides, the terms of the service level agreement being processed into a set of policies to be applied, the policies including dynamic selection and allocation of resources so as to provide the selected quality of service.
